# FASCICULE DE BREVET EUROPEEN

(11) **EP 0 738 220 B1**
(45) Date de publication et mention de la délivrance du brevet: **26.04.2000**
(21) Numéro de dépôt: 95904574.1
(22) Date de dépôt: 20.12.1994
(51) Int. Cl.: B61F 5/30, B60G 11/16, F16F 3/04

(54) **DISPOSITIF DE MAINTIEN D'UN ENSEMBLE ELASTIQUE D'UNE SUSPENSION D'UN MATERIEL FERROVIAIRE, SUSPENSION ET MATERIEL FERROVIAIRE COMPRENANT CE DISPOSITIF DE MAINTIEN**
Haltevorrichtung für den federelastischen Aufbau einer Aufhängung für Schienenfahrzeuge, Aufhängung und Schienenfahrzeug mit einer solchen Haltevorrichtung
DEVICE FOR HOLDING A SUSPENSION RESILIENT ASSEMBLY FOR RAILWAY VEHICLES AND RAILWAY VEHICLE COMPRISING SAID DEVICE

(30) Priorité: 03.01.1994 FR 9400092
(43) Date de publication de la demande: 23.10.1996
(73) Titulaire: ARBEL FAUVET RAIL S.A., F-59500 Douai (FR)
(72) Inventeur: VEN, Jean-Michel, F-59800 Lille (FR)
(74) Mandataire: Ecrepont, Robert
(86) Numéro de dépôt international: FR9401496
(87) Numéro de publication internationale: WO9518735

(56) Documents cités:
- EP-A- 0 281 173
- EP-A- 0 443 953
- BE-A- 636 150

## Description

L'invention se rapporte à un dispositif de maintien d'un ensemble élastique d'une suspension d'un matériel ferroviaire tel un bogie.

Elle se rapporte également à la suspension et au matériel ferroviaire comprenant ce dispositif de maintien.

Classiquement, la suspension d'un matériel ferroviaire comprend un ensemble élastique qui est constitué d'un premier ressort hélicoïdal dit de tare dans lequel est logé un second ressort dit de charge, voir par exemple EP-A-0 443 953.

Cet ensemble élastique a son extrémité inférieure qui est sollicitée au moins indirectement par la boite d'essieu dans laquelle est guidée en rotation la fusée de l'essieu du matériel ferroviaire tandis que son extrémité supérieure est reliée au chassis du matériel ferroviaire par l'intermédiaire d'un dispositif de maintien.

La boîte d'essieu comprend à cet effet une console sur laquelle repose l'extrémité inférieure de l'ensemble élastique.

Ce dispositif de maintien comprend :
- d'une part, un chapeau qui, couvrant l'ensemble élastique reçoit la charge du chassis comprimant l'ensemble élastique par traction vers le bas d'au moins un anneau oblique indéformable articulé et,
- d'autre part, des moyens de centrage de l'extrémité supérieure de l'ensemble élastique.

Ces moyens de centrage comprennent :
- pour le ressort de tare, une portée cylindrique interne qui, réalisée au moins indirectement par la face interne du chapeau, coopère avec l'enveloppe externe du ressort de tare et,
- pour le ressort de charge, un plot d'axe au moins sensiblement vertical qui coopère par sa face latérale avec l'enveloppe interne du ressort de charge.

Dans les solutions connues à ce jour, le plot est solidaire du chassis et traverse avec jeu une découpe que le fond du chapeau présente à cet effet dans sa paroi supérieure, laquelle découpe est au moins suffisamment large pour que le chapeau puisse se déplacer dans un plan radial à l'axe de ce plot.

Outre sa fonction de maintien de l'ensemble élastique,le chapeau actionne un poussoir portant à son extrémité une surface de frottement coopérant avec une autre surface de frottement portée par la boite d'essieu, ceci de manière à amortir le déplacement de la boite d'essieu tant dans ses déplacements verticaux que dans ses déplacements longitudinaux et transversaux.

Cette fonction d'amortissement est trés importante.

Dans les dispositifs connus à ce jour, le fond du chapeau est limité à une collerette juste suffisante pour l'appui du ressort de tare et la découpe, outre le plot, laisse passer, avec le jeu précité, l'embase de ce plot solidaire du chassis et sur laquelle au delà d'une certaine charge prend appui l'extrémité supérieure du ressort de charge.

Compte tenu de la manière dont sont conçus les dispositifs de maintien connus à ce jour, c'est uniquement le ressort de tare qui sollicite le chapeau alors que ce ressort n'effectue qu'une reprise partielle de la charge totale du matériel ferroviaire et que c'est le ressort de charge qui en dynamique est le ressort le plus sollicité de l'ensemble élastique.

Un des résultats que l'invention vise à obtenir est un dispositif de maintien du type précité dont le chapeau est sollicité tant par le ressort de tare que par le ressort de charge.

A cet effet, l'invention a pour objet un tel dispositif de maintien notamment caractérisé en ce que l'appui supérieur du ressort de charge est au moins indirectement solidaire du chapeau.

L'invention sera bien comprise à l'aide de la description ci-aprés faite à titre d'exemple non limitatif en regard du dessin ci-annexé qui représente schématiquement :

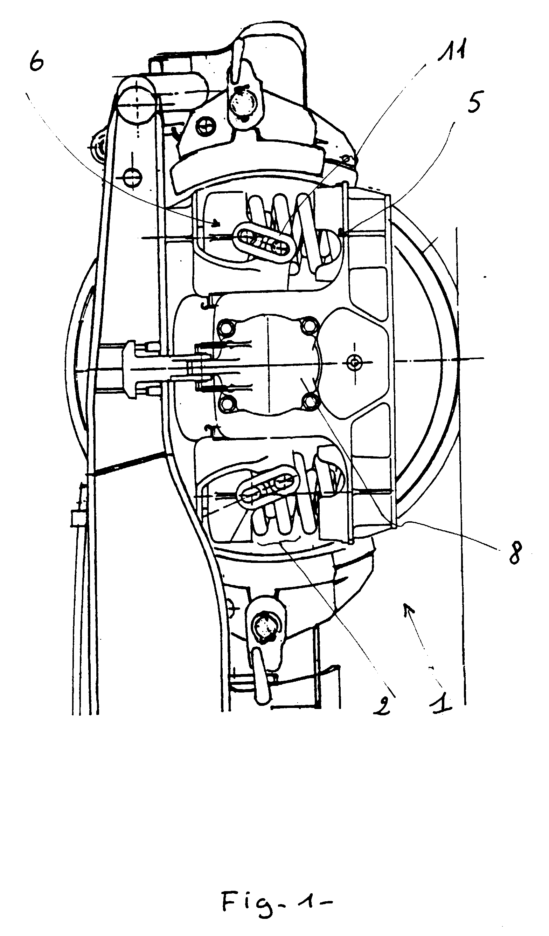

- figure 1 : une vue latérale partielle d'un matériel ferroviaire,

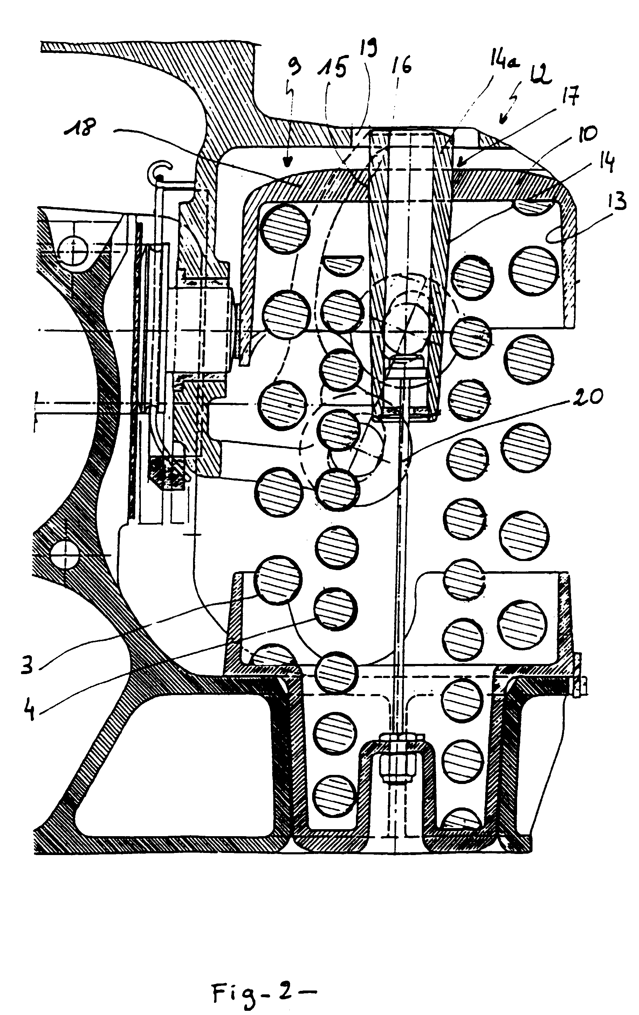

- figure 2 : une vue en coupe d'un dispositif de maintien.

En se reportant au dessin, on voit que, pour répartir au sol le poids d'un matériel ferroviaire tel un wagon équipé d'au moins un bogie, entre les essieux et les chassis de leur plateforme ou du bogie sont prévus des moyens de suspension 1.

Classiquement, chaque élément de cette suspension d'un matériel ferroviaire comprend un ensemble élastique 2 constitué par un ressort 3 hélicoïdal, dit de tare, dans lequel est logé un second ressort 4, dit de charge.

En deçà d'une certaine charge, seul le ressort de tare travaille constamment.

Au delà d'une certaine charge, du fait de l'affaissement du ressort de tare, le ressort de charge reçoit également la charge du chassis et travaille concuremment au ressort de tare.

Pendant leur travail, les deux ressorts 3, 4 coopèrent à cet effet avec chacun un appui inférieur 5 et un appui supérieur 6.

Cet ensemble élastique 2 a son extrémité inférieure qui est sollicitée au moins indirectement par la boite d'essieu 8 dans laquelle est guidée en rotation la fusée de l'essieu du matériel ferroviaire et sur une console de laquelle boite d'essieu cette extrémité inférieure repose tandis que son extrémité supérieure est reliée au chassis par l'intermédiaire d'un dispositif de maintien 9.

Ce dispositif de maintien 9 comprend :
- d'une part, un chapeau 10 qui, couvrant l'ensemble élastique, reçoit la charge du chassis comprimant l'ensemble élastique par traction vers le bas d'au moins un anneau oblique 11 indéformable articulé et,
- d'autre part, des moyens 12 de centrage de l'extrémité supérieure de l'ensemble élastique.

Ces moyens de centrage comprennent :
- pour le ressort 3 de tare, une portée interne 13 qui, réalisée au moins indirectement par la face interne du chapeau 10, coopère avec l'enveloppe externe du ressort de tare et,
- pour le ressort 4 de charge, un plot 14 d'axe au moins sensiblement vertical qui coopère par sa face latérale avec l'enveloppe interne du ressort 4 de charge.

Selon la caractéristique de l'invention, selon la rev.1 l'appui supérieur du ressort 4 de charge est au moins indirectement solidaire du chapeau 10.

Selon une autre caractéristique de l'invention, (cf.rev.2) le plot 14 de centrage du ressort de charge est solidarisé au dit chapeau 10 par tout moyen ou procédé d'association connu de manière à, comme lui, être mobile par rapport au chassis.

Selon un autre caractéristique de l'invention, (rev.3) les moyens d'association du plot 14 comprennent au moins deux portées 15, 16 cylindriques complémentaires pour constituer un emboitement au moins pratiquement sans jeu du plot 14 dans un alésage 17 que présente à cet effet de part en part le fond du chapeau.

De préférence, pour éviter tout jeu, il s'agit d'un emboitement conique.(rev.4)

Avantageusement, le fond du chapeau présente au moins localement une surépaisseur 18 conférant à cet alésage une longueur permettant d'obtenir un rapport longueur d'emboitement sur section qui sera suffisant pour un assemblage correct. (rev.5)

Cette surépaisseur sera sensiblement progressive et permettra au fond d'encaisser les sollicitations du ressort de charge. (rev.6)

Dans une forme préférée de réalisation de l,invention, (rev.7) au lieu que le plot 14 soit logé intégralement dans l'espace situé du côté de la concavité du chapeau 10, une fraction 14a de ce plot fait saillie au dessus du chapeau et s'élève vers le chassis qui, dans sa zone qui se situe immédiatement au dessus du chapeau, présente une découpe 19 permettant le passage et le débattement de cette fraction 14a du plot dans la zone considérée.

Selon une autre caractéristique de l'invention, le plot 14 de centrage du ressort de charge comprend un moyen 20 de liaison mécanique avec l'extrémité intérieure de l'ensemble élastique afin, lors du changement d'essieu, d'éviter une dissociation de l'ensemble élastique et du chassis. (rev.8).

## Revendications

1. Dispositif de maintien d'un ensemble élastique d'une suspension d'un matériel ferroviaire,
cet ensemble élastique étant constitué par un ressort (3) hélicoïdal, dit de tare, dans lequel est logé un second ressort (4), dit de charge, lesquels ressorts (3, 4), pendant leur travail, coopèrent à cet effet avec chacun un appui inférieur (5) et un appui supérieur (6),
lequel dispositif de maintien comprend :
- d'une part, un chapeau (10) qui, couvrant l'ensemble élastique, reçoit la charge du chassis comprimant l'ensemble élastique par traction vers le bas d'au moins un anneau oblique (11) indéformable articulé et,
- d'autre part, des moyens (12) de centrage de l'extrémité supérieure de l'ensemble élastique,
lesquels moyens de centrage comprenant :
- pour le ressort (3) de tare, une portée interne (13) qui, réalisée au moins indirectement par la face interne du chapeau (10), coopère avec l'enveloppe externe du ressort de tare et,
- pour le ressort (4) de charge, un plot (14) d'axe au moins sensiblement vertical qui coopère par sa face latérale avec l'enveloppe interne du ressort (4) de charge,
ce dispositif étant **CARACTERISE** en ce que l'appui supérieur du ressort (4) de charge est au moins indirectement solidaire du chapeau (10).

2. Dispositif selon la revendication 1 **caractérisé** en ce que le plot (14) de centrage du ressort de charge est solidarisé au dit chapeau par tout moyen d'association connu de manière à, comme lui, être mobile par rapport au chassis.

3. Dispositif selon la revendication 1 ou 2 **caractérisé** en ce que les moyens d'association comprennent au moins deux portées (15, 16) cylindriques complémentaires pour constituer un emboitement au moins pratiquement sans jeu du plot (14) dans un alésage (17) que présente à cet effet de part en part le fond du chapeau.

4. Dispositif selon la revendication 3 **caractérisé** en ce que, pour éviter tout jeu, l'emboitement est un emboitement conique.

5. Dispositif selon l'une quelconque des revendications 1 à 4 **caractérisé** en ce que le fond du chapeau (10) présente au moins localement une surépaisseur (18) conférant à cet alésage une longueur permettant d'obtenir un rapport longueur d'emboitement sur section qui est suffisant pour un assemblage correct.

6. Dispositif selon la revendication 5 **caractérisé** en ce que la surépaisseur (18) est sensiblement progressive.

7. Dispositif selon l'une quelconque des revendications 2 à 6 **caractérisé** en ce qu'au lieu que le plot (14) soit logé intégralement dans l'espace situé du côté de la concavité du chapeau (10), une fraction (14a) de ce plot fait saillie au dessus du chapeau et s'élève vers le chassis qui, dans sa zone qui se situe immédiatement au dessus du chapeau, présente une découpe (19) permettant le passage et le débattement de cette fraction (14a) du plot dans la zone considérée.

8. Dispositif selon la revendication 2 **caractérisé** en ce que le plot (14) de centrage du ressort de charge comprend un moyen (20) de liaison mécanique avec l'extrémité inférieure de l'ensemble élastique afin, lors du changement d'essieu, d'éviter une dissociation de l'ensemble élastique et du chassis.

9. Suspension pour un matériel ferroviaire **caractérisée** en ce qu'elle comprend un dispositif selon l'une quelconque des revendications 1 à 8.

10. Matériel ferroviaire **caractérisé** en ce qu'il comprend un dispositif de maintien selon l'une quelconque des revendications 1 à 8.

## Claims

1. A device for holding a resilient assembly for suspension for railway stock,
this resilient assembly being formed by a helical spring (3), referred to as a calibrating spring, in which is housed a second spring (4), referred to as a loading spring, the springs (3, 4), during their operation, each co-operating for this purpose with a lower support (5) and an upper support (6),
the holding device comprising:
- firstly, a cap (10) which covers the resilient assembly and receives the load of the chassis, compressing the resilient assembly by traction towards the bottom of at least one non-deformable articulated oblique ring (11), and
- secondly, means (12) for centering the upper end of the resilient assembly,
the centering means comprising:
- for the calibrating spring (3), an inner bearing surface (13) which is formed at least indirectly by the inner face of the cap (10) and co-operates with the outer envelope of the calibrating spring, and
- for the loading spring (4), an at least substantially vertical axial pin (14) which, with its lateral face, co-operates with the inner envelope of the loading spring (4),
this device being characterised in that upper support of the loading spring (4) is at least indirectly connected to the cap (10).

2. A device according to claim 1, characterised in that the centering pin (14) of the loading spring is connected to the said cap by any known connecting means so as to be, like it, movable relative to the chassis.

3. A device according to claim 1 or 2, characterised in that the connecting means comprise at least two complementary cylindrical bearing surfaces (15, 16) to provide engagement of the pin (14), at least substantially without play, in a bore (17) extending through the base of the cap for this purpose.

4. A device according to claim 3, characterised in that, to avoid all play, the engagement is conical engagement.

5. A device according to any one of claim 1 to 4, characterised in that the base of the cap (10) has, at least locally, increased thickness (18) giving this bore a length providing a ratio of engagement length to cross-section which is sufficient for correct assembly.

6. A device according to claim 5, characterised in that the increased thickness (18) is substantially progressive.

7. A device according to any one of claims 2 to 6, characterised in that, instead of the pin (14) being housed entirely in the space on the concave side of the cap (10), a portion (14a) of this pin projects above the cap and extends towards the chassis which, in its region immediately above the cap, has a cut-out (19) permitting the passage and displacement of this portion (14a) of the pin in the region in question.

8. A device according to claim 2, characterised in that the centering pin (14) of the loading spring comprises a means (20) for mechanical connection to the lower end of the resilient assembly so as to avoid, when changing the axle, disconnection of the resilient assembly and the chassis.

9. Suspension for railway stock, characterised in that it comprises a device according to any one of claims 1 to 8.

10. Railway stock, characterised in that it comprises a holding device according to any one of claims 1 to 8.

## Patentansprüche

1. Haltevorrichtung für den federelastischen Aufbau einer Aufhängung für Schienenfahrzeuge,
wobei der federelastische Aufbau aus einer als Leergewichtsfeder bezeichneten Schraubenfeder (3) besteht, in welcher eine als Lastfeder bezeichnete zweite Feder (4) aufgenommen ist, wobei die Federn (3, 4) während ihres Einsatz zu diesem Zweck jeweils sowohl mit einer unteren Auflage (5) als auch mit einer oberen Auflage (6) zusammenwirken,
welche folgendes aufweist:
- zum einen eine Abdeckung (10), welche unter Abdeckung des federelastischen Aufbaus die Last des Rahmens aufnimmt, welche den federelastischen Aufbau durch nach unten gerichtete Zugkraft auf mindestens einen angelenkten, nicht verformbaren Schrägring (11) aufnimmt, und
- zum anderen eine Einrichtung (12) zum Zentrieren des oberen Endes des federelastischen Aufbaus,
wobei die Zentriereinrichtung folgendes aufweist:
- für die Leergewichtsfeder (3) einen innenliegenden Bereich (13), welcher zumindest indirekt von der Innenfläche der Abdeckung gebildet ist und mit der außenliegenden Umhüllung der Leergewichtsfeder (3) zusammenwirkt, und
- für die Lastfeder (4) ein Kontaktstück (14), dessen Achse zumindest im wesentlichen vertikal verläuft und welches über seine Seitenfläche mit der innenliegenden Umhüllung der Lastfeder (4) zusammenwirkt,
dadurch **GEKENNZEICHNET**, daß die obere Auflage für die Lastfeder (4) zumindest indirekt fest mit der Abdeckung (10) verbunden ist.

2. Vorrichtung nach Anspruch 1, dadurch **gekennzeichnet**, daß das Kontaktstück (14) zum Zentrieren der Lastfeder fest mit der Abdeckung mittels jedes bekannten Verbindungsmittels fest in der Weise verbunden ist, daß es als solches bezüglich des Rahmens beweglich ist.

3. Vorrichtung nach Anspruch 1 oder 2, dadurch **gekennzeichnet**, daß die Verbindungsmittel mindestens zwei komplementäre zylinderförmige Bereiche (15, 16) in der Form aufweisen, daß ein Aufbau entsteht bei welchem das Kontaktstück (14) zumindest praktisch ohne Spiel in einer Bohrung (17) eingesetzt ist, die zu diese Zweck im Boden der Abdeckung von beiden Seiten vorgesehen ist.

4. Vorrichtung nach Anspruch 3, dadurc**h gekennzeichnet**, daß der ineinander gesetzte Aufbau konisch ist, um jegliches Spiel zu vermeiden.

5. Vorrichtung nach einem der Ansprüche 1 bis 4, dadurch **gekennzeichnet**, daß der Boden der Abdeckung (10) zumindest örtlich begrenzt eine Verdickung (18) aufweist, wodurch diese Bohrung eine Länge erhält, welche es ermöglicht, ein Verhältnis zwischen der Länge des Einschubs zum Querschnitt zu erhalten, das für eine korrekte Montage ausreichend ist.

6. Vorrichtung nach Anspruch 5, dadurch **gekennzeichnet**, daß die Verdickung (18) im wesentlichen zunimmt.

7. Vorrichtung nach einem der Ansprüche 2 bis 6, dadurch **gekennzeichnet**, daß ein Teil (14a) des Kontaktstücks (14) über die Abdeckung hinaus nach oben vorsteht und sich zum Rahmen hin erstreckt, statt daß das Kontaktstück (14) vollständig in dem freien Raum untergebracht ist, der sich auf der Seite des konkaven Bereichs der Abdeckung (10) befindet, wobei der Rahmen in dem Bereich, der unmittelbar über der Abdeckung liegt einen Ausschnitt (19) aufweist, welcher den Durchtritt und ein Durchfedern dieses Teils (14a) des Kontaktstücks in dem betreffenden Bereich gestattet.

8. Vorrichtung nach Anspruch 2, dadurch **gekennzeichnet**, daß das Kontaktstück (14) zum Zentrieren der Lastfeder eine Einrichtung (20) zur mechanischen Verbindung mit dem unteren Ende des federelastischen Aufbaus aufweist, damit bei einem Wechsel der Radachse eine Unterbrechung der Verbindung zwischen dem federelastischen Aufbau und dem Rahmen vermieden wird.

9. Aufhängung für Schienenfahrzeuge, dadurch **gekennzeichnet**, daß sie eine Vorrichtung nach einem der Ansprüche 1 bis 8 aufweist.

10. Schienenfahrzeug, dadurch **gekennzeichnet**, daß es eine Haltevorrichtung nach einem der Ansprüche 1 bis 8 aufweist.
